# EUROPEAN PATENT SPECIFICATION

(11) **EP 2 154 771 B1**
(45) Date of publication and mention of the grant of the patent: **26.10.2011**
(21) Application number: 08162315.9
(22) Date of filing: 13.08.2008
(51) Int. Cl.: H02M 1/44

(54) **Circuit and method for reducing electromagnetic interference**
Schaltung und Verfahren zur Reduzierung elektromagnetischer Interferenzen
Circuit et procédé de réduction d'interférence électromagnétique

(43) Date of publication of application: 17.02.2010
(73) Proprietor: Osram AG, 81543 München (DE); OSRAM S.P.A. - SOCIETA' RIUNITE OSRAM EDISON CLERICI, 20126 Milano (IT)
(72) Inventor: Zanforlin, Nicola, 35011, Campodarsego (Padova) (IT); De Anna, Paolo, 31039, Riese Pio X (Treviso) (IT)
(74) Representative: Bosotti, Luciano

(56) References cited:
- EP-A- 1 791 399
- US-A- 5 640 315
- US-A1- 2005 110 473
- SANTOLARIA A ET AL: "EMI reduction in switched power converters by means of spread spectrum modulation techniques" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, 20 June 2004 (2004-06-20), pages 292-296Vol.1, XP010738006 ISBN: 978-0-7803-8399-9

## Description

### Field of the invention

This disclosure relates to reducing electromagnetic interference (EMI).

The disclosure was devised with specific attention paid to its possible use in reducing EMI as generated e.g. by converters for feeding lighting equipment.

### Description of the related art

Power supplies with a variable operating frequency are an experimented approach in solving EMI problems in conjunction with off-line switching power supplies. A variable operating frequency leads to the noise spectrum being spread over a range of frequencies, thus reducing the peak values around a fixed frequency.

Such an approach is satisfactory in the presence of heavy or medium loads. The input voltage, coming directly from the rectified AC mains voltage or from a PFC (Power Factor Correction) input stage is not perfectly stabilized, and low frequency ripple (100Hz in the case of 50Hz mains as used in Europe) is eliminated by the feedback loop that changes the working frequency in order to keep the output voltage (in the case of constant voltage devices) or the output current (in the case of constant current devices) constant irrespective of input fluctuations. This operation is performed by the switching controller that varies the working frequency so that the device can produce more or less power depending on the load connected thereto.

For the same reasons, if the input voltage is fixed, but the load changes continuously, for example if the output of the power supply is connected to a low voltage dimmer, the control loop will continuously modify the working frequency in order to keep the output constant.

The benefits of frequency variation are well visible by observing an EMI spectrum as measured with a spectrum analyzer especially in the range of the conducted noise (from 9 kHz to 30 MHz for European lighting equipment). These benefits can be best appreciated by comparing two power supplies, the former working with a variable frequency (for example a series resonant converter based on a half-bridge topology), and the latter working at a fixed frequency (for instance, a standard hard-switching half-bridge converter).

Such an approach may not be satisfactory in the presence of light loads or under no load conditions (i.e. little or no current absorption), namely when the dimming level is close to 0% due to a dimming action performed by a dimmer or when the load is completely disconnected. In that case, the input voltage is completely fixed and the input capacitor (which stores the energy during the period - for instance 10ms - of the ac mains input) is only slightly discharged or remains completely charged at the maximum value since the load absorbs only a very small amount of energy to be supplied. This situation also occurs if the device is connected to a dimmer: the switching controller tries to react to the load connection but, in the presence of light load, in order to keep the output stable, it has to produce only a small variation of the working frequency. As a consequence of this, observing the EMI spectrum indicates only a small reduction of the spikes.

A number of solutions have been proposed in the past to overcome this drawback.

A first solution involves using large EMI filters operating in the range of the resulting EMI noise.

While effective, these filters exhibit a number of intrinsic disadvantages, in that they i.a.:
- add to the cost (and thus to the price) of the device,
- increase the size of the device, and
- may strongly decrease the efficiency of the device.

Another known approach involves using a so-called "bleeder" resistor arranged at the input or the output side of the power supply device. This resistor can be arranged either across the input capacitor or across the output capacitor of the device.

The bleeder resistor reduces extensively the efficiency in the presence of light loads and may require to be disconnected in the presence of heavy loads to provide acceptable operation. Also, solutions based on a bleeder resistor exhibit further disadvantages such as:
- when no load is connected to the device or the power adsorbed by the load is very small (for instance, when the device is at standby) the bleeder resistor undesirably absorbs power;
- the bleeder resistor inevitably needs to be of relatively high value. To obtain acceptable results (that is, an acceptable frequency variation) a certain amount of power must be dissipated (typically 5-10% of the nominal power); this requires a resistor having a certain size, which reduces the power/volume (W/cm³) ratio in the device.

Still another solution is based on "burst mode" operation: when the working frequency reaches a maximum or minimum limit value (depending on the topology implemented and the working mode) the controller stops for a certain time emitting driving commands to the electronic switches (e.g. power mosfets) in the converter. By adopting this technique, the limit frequency remains the same while the driving commands appear only for a short (usually pre-defined) time. By way of example, if a minimum working frequency of 10KHz is reached, the driving pulses to the mosfets are discontinued. As a consequence, they appear approximately only for 50% of the time. The result is a sort of a mixed pulse-plus-frequency modulation which is intrinsically non-dissipative when compared in terms of efficiency to the solutions considered previously.

Rather than leading to a spreading of the noise spectrum, burst mode operation reduces the EMI noise because the power stages stop for a certain time. The limit frequency is in any case fixed and if this frequency (or a multiple of it) represents the source of noise, it is less captured by any device exposed to EMI. This may lead to an improvement, but the noise energy still remains concentrated at a given frequency. So, burst mode operation is unable to solve EMI problems if the device is a small power device (less than 20) and may be generally unable to solve the problem even for larger powers without resorting to an EMI filter.

The possibility also exists of reducing the number of pulses in a group thus increasing the burst period by limiting the maximum or minimum frequency to a higher or lower value. This however has the disadvantage of leading to an unacceptable audio noise due to the distance between two consecutive groups of pulses. In fact, the burst period may easily fall into the audio frequency range for which EMI protection is sought.

Modifications to parallel/series resonant converter topologies may lead, with the addition of a small amount of components, to dispensing with a number of the drawbacks considered in the foregoing, thus leading to arrangements that:
- no longer require the use of (large) EMI filters, thus avoiding any variation in efficiency (especially the starting efficiency) with varying line or load conditions,
- distribute the noise spectrum over a wide range, excepting however the audio frequency range,
- lead to solutions adapted to be implemented with very cheap components.

These solutions may involve resonant converter arrangements where the primary inductor comprised of the sum of the resonant and the leakage inductor of the insulating transformer resonates with an output resonant capacitor as well as arrangements where the magnetizing inductor of the insulating transformer resonates with two capacitors arranged in parallel.

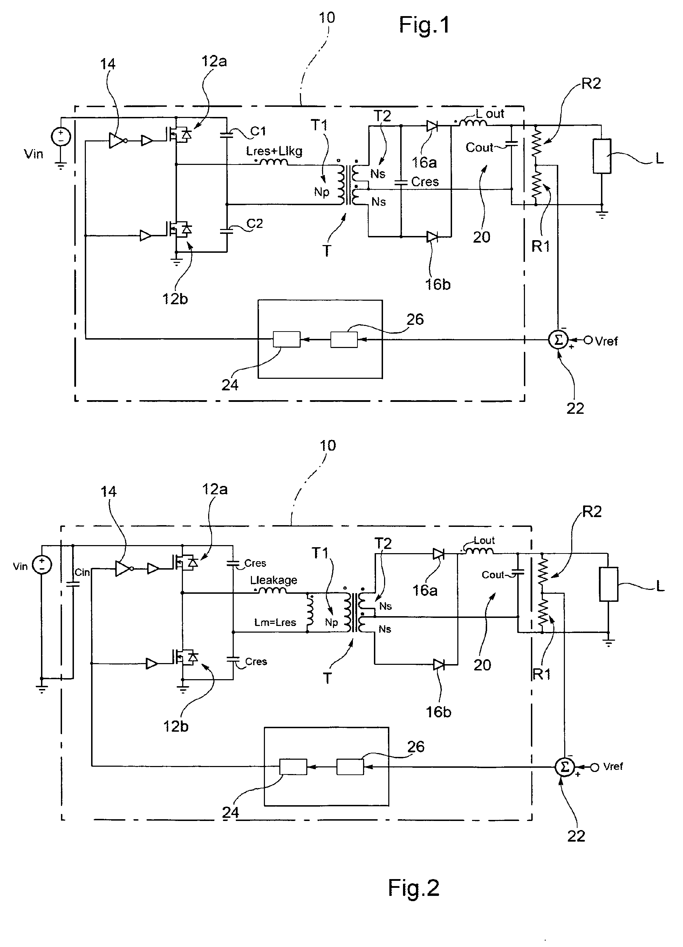

Figures 1 and 2 are examples of such types of arrangements.

Both arrangements shown in figures 1 and 2 include a power stage 10 intended to feed an output voltage to a load L.

The power stage 10 includes a pair of electronic switches 12a, 12b - typically in the form of power mosfets - which are driven on and off alternatively (see the logic inverter 14 associated to the power switch 12a, in the example shown). The two switches in question are connected in a half-bridge arrangement to two capacitors C1, C2 or Cres in order to alternatively connect to an input voltage Vin (having possibly associated an input capacitor Cin, in the layout of figure 2) the primary winding T1 of an insulating transformer T. The output winding T2 of the transformer T drives via two diodes 16a, 16b the load L via a low pass LC filter 20.

In the embodiment of figure 1, the primary inductor comprised of the sum of the resonant inductor Lres and leakage inductor Llkg of the transformer T resonates with an output capacitor Cres connected across the secondary winding T2. In the arrangement of figure 2, the magnetisizing inductor LM of the transformer T is caused to resonate with the two capacitors Cres associated with the switches 12a and 12b.

In both figures 1 and 2, a voltage divider including two resistors R1 and R2 is connected across the load L as a sensor to sense the load L. The output signal from the divider R1, R2 is fed (with a negative sign) to a summing node 22 which in turn receives (with a positive sign) a reference voltage Vref.

The output of the summation node drives a controller. In the embodiment illustrated, the controller includes a voltage controlled oscillator (VCO) 24 whose output drives the electronic switches 12a, 12b. In the embodiments illustrated, the VCO 24 is driven by controller unit 26 - e.g. a Proportional/Integral (PI) or Proportional/Integral/Differential (PID) controller.

More specifically, the invention relates to a circuit according to the preamble of claim 1, which is known e.g. from US 2005/110473 A1 or US-A-5 640 315.

### Object and summary of the invention

The preceding description indicates that the need is felt for improved arrangements to dispense with the drawbacks intrinsic to the various arrangements discussed in the foregoing.

The object of the present invention is to provide such an improved arrangement. According to the invention, that object is achieved by means of an arrangement having the features set forth in the claim 1 that follows. The invention also relates to a corresponding method as called for in claim 11.

In brief, the inventors have noted that topologies such as those illustrated in figures 1 and 2 (and, generally, any arrangement including a switched power supply with a sensor for sensing a load fed by the power supply and a feedback path controlling the switching frequency of the switched power supply as a function of the load) exhibit a voltage gain v. frequency behaviour where, starting from the resonant frequency, the gain (normalised with respect to the starting maximum value) eventually becomes almost flat. For instance, a constant voltage (e.g. 24 Volt) power supply which currently handles loads between 100% and 10% of the nominal value by varying the frequency between 90 kHZ and 110 kHz may reach an operating frequency of about 200 kHz when working at no load. This means that if one causes the system to vary its output even of a small amount, one may obtain a significant variation in the output frequency.

An embodiment of the improved arrangement described herein is thus based on the concept of injecting a small disturbance at the output side of a device as those illustrated in the foregoing (or any resonant circuit topology based on the same operating principle). In an embodiment, the disturbance is injected at the point where an output voltage divider provides a feedback signal representative of the output signal to be compared with a reference voltage Vref.

In an embodiment, the disturbance can be generated by a low frequency square wave oscillator that slightly affects the voltage feedback, for instance via a diode and a resistor.

The arrangement described herein provides an effective spread in the EMI spectrum which represents a viable solution to the problem of suppressing any obnoxious interference.

Experiments carried out by the applicant indicate that a disturbance with a frequency in the range 100 Hz - 1 kHz with an amplitude of the order of 2-3% of the output voltage is effective in generating a satisfactory spread in the EMI spectrum.

These values (and especially the frequency) may be properly adapted depending on the specific operational needs.

### Brief description of the annexed views

The invention will now be described, by way of example only, with reference to the annexed views, wherein:
- figures 1 and 2 have already been discussed in the foregoing,
- figure 3 is illustrative of a first embodiment of the arrangement described herein,
- figure 4 is illustrative of a second embodiment of the arrangement described herein, and
- figure 5 is illustrative of a third embodiment of the arrangement described herein.

### Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

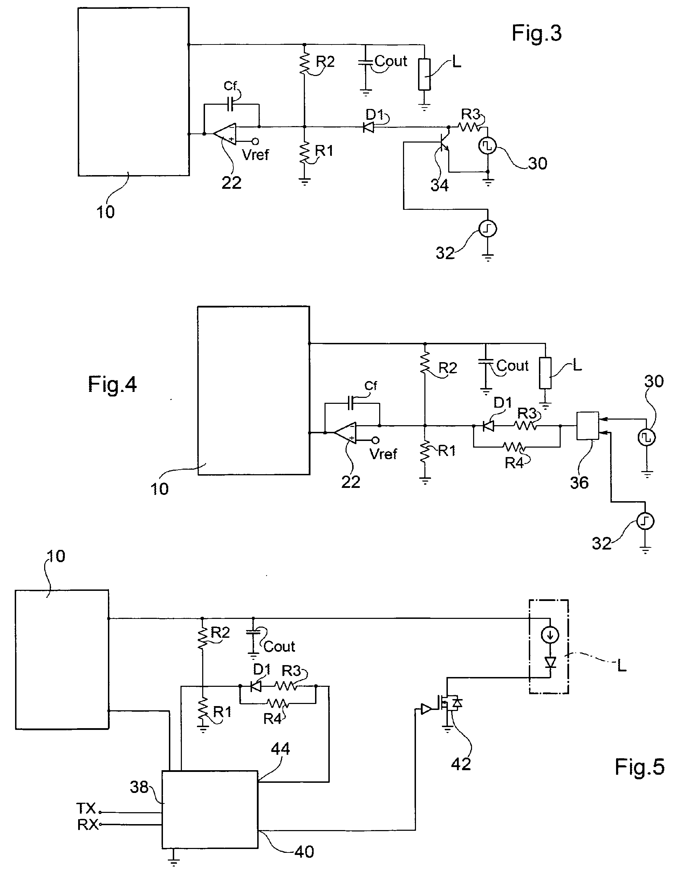

Throughout figures 3 to 5, reference numeral 10 is used to denote the corresponding set of components described in detail with reference to figures 1 and 2. For that reasons, the various elements included in the blocks labelled 10 in figures 1 and 2 will not be described again.

This schematic representation (as used in figures 3 to 5) is representative of the fact that the arrangement described herein may be applied also to converter arrangements that do not correspond exactly to those exemplified in figures 1 and 2, provided these are based on the same operating principles.

It will be appreciated that throughout figures 3 to 5 R1, R2 denotes the voltage divider arranged at the output of the power stage 10 to provide the feedback signal representative of the output voltage on the load L to be fed back to the summing node 22 to provide (for instance via the PI/PID controller 26 and the VCO 24) the feedback signal towards the electronic switches 12a, 12b.

In figures 3 to 5, the capacitor Cout in the low pass filter 20 (which is in fact included in the block 10) has been represented as a separate element. This was done in order to emphasize the role played by the capacitor Cout in defining, together with the load L, the time constant of the output filter.

In figures 3 and 4 Cf schematically denotes the capacitor element(s) included in the integrator of the PI/PID controller 26.

In both embodiments of figures 3 and 4, an oscillator 30 is present which produces a square wave with a period T and a duty cycle of e.g. 50%. The square wave is injected (e.g. via a resistor R3 and a diode D1) as a small disturbance signal at the partition point of the voltage divider R1, R2. The small disturbance signal is a low frequency signal (e.g. 300 Hz): this is substantially lower than the switching frequency at which the switches 12a, 12b are driven - this is typically in the tens of KHz range and as such is the source of EMI.

This low frequency disturbance signal is thus fed into the feedback loop of the controller and causes the output frequency of the VCO to be correspondingly swept thus producing the desired spreading of the EMI produced by the converter.

In the embodiment of figure 3, the disturbance injected into the feedback loop via the series connection of the resistor R3 and the diode D1 (and thus the resulting EMI sweep) is non-symmetrical.

In the embodiment of figure 4 the series connection of the resistor R3 and the diode D1 is connected in parallel to a further resistor R4. The values of the resistors R3 and R4 are selected in such a way that the output voltage of the oscillator 30 affects in the same way the feedback voltage during the high and the low state of the oscillator 30. In that way, the disturbance injected into the feedback loop (and the resulting EMI sweep) is symmetrical.

In the presence of a light load - i.e. low current absorption - the impedance Rload exhibited by the load L (a purely resistive value of the load impedance is assumed here for the sake of simplicity) will be high and the time constant of the output filter, namely Rload.Cout, will be larger than the period T of the injected noise. In these conditions the ripple induced on the converter output by the noise injected into the feedback loop will in any case be negligible while producing an effective variation (i.e. spread) of the EMI produced by the switching behaviour of the converter.

Specifically, the output voltage will remain constant in the case of a symmetric disturbance being injected (i.e. the embodiment of figure 4). In the case of an asymmetric disturbance, the voltage will be affected to a very minor amount (e.g. 200 - 300 mV).

In the presence of a heavy load - i.e. high current absorption - the fluctuations can be visible and thus not acceptable.

For that reason, an enable/disable EMI correction switch 32 (which can be either set manually or operated automatically by a circuit sensing the value of the load L) will act on an electronic switch such as a transistor 34 to disable the low frequency oscillator 30 (for instance by a short-circuiting the output thereof).

In the embodiment of figure 4, a high impedance device 36 such as a conventional three-state buffer is used to disconnect the oscillator 30: in fact, in the case of figure 4, an arrangement including just the transistor 34 as shown in figure 3 may not produce the desired result because the resistor R4 of the arrangement changes the structure of the voltage divider R1, R2.

Figure 5 is an example of an arrangement essentially akin to the arrangement of figure 4 in so far the elements R1, R2, Cout, D1, R3 and R4 are concerned.

The arrangement of figure 5 takes into account the possible availability of a microcontroller 38 which may be present in the controller 10 for other purposes (for instance as a part of a dimmer) . In the block diagram of figure 5 reference 40 denotes a pin of the microcontroller 38 that drives an electronic switch 42 such as e.g. a power mosfet to perform the dimming action proper.

In such a case, the function of the oscillator 30 of figures 3 and 4 can be easily obtained by toggling the output of e.g. a three-state logic port 44 of the microcontroller 38, thus producing a PWM output with a duty cycle which can be fixed at 50%.

As the microcontroller 38 will be generally aware of the value of the load L, the microcontroller 38 will be in a position to disable the function of the port 44 as an oscillator (for instance by placing the port 44 at a high impedance state).

Experiments carried out by the applicant have demonstrated satisfactory operation of the arrangement of figure 5 in the case of a power supply with integrated dimmer and two-wire digital interface (TX-RX). Such an arrangement has been tested under "no load" conditions first without applying any EMI correction, then applying a non-symmetrical disturbance (according to the basic layout of figure 3) obtained from a 300 Hz, 50% duty cycle square wave. This was used to create a small perturbation at the feedback node of the power stage (output resistor divider R1, R2). In the specific experimental arrangement tested a value of 23.7 KOhm was selected for the resistor R3. Vout was 24 volt and the reference voltage was 2.5 volt. R1 was selected at 2.7 kΩ and R2 was selected at 47 Kohm. The square wave amplitude was 3.3 volts and the current coming from the feedback resistor R2 was about 900µA, while the current coming from the compensation circuit was about 10µA i.e. 1.1% of the feedback current.

By using such an arrangement an effective spread of EMI noise over the range 0.15 to 3 MHz was observed. This is considered acceptable for a wide range of applications related to lighting equipment.

Without prejudice to the underlying principles of the invention, the details and embodiments may vary, even significantly, with respect to what has been described herein by way of example only, without departing from the scope of the invention as defined in the annexed claims.

## Claims

1. A circuit arrangement for reducing electromagnetic interference from a switched power supply (10) including a sensor (R1, R2) to sense a load (L) fed by the power supply (10) and a feedback path (22, 24, 26) to control the switching frequency of the switched power supply (10) as a function of said load (L) as sensed by said sensor (R1, R2), the arrangement including an oscillator (30, 38, 44) to inject into said feedback path (22, 24, 26) an oscillating signal, said oscillating signal producing a spread in the spectrum of the electromagnetic noise produced by the switched power supply (10), **characterized in that** the circuit includes a switch (34, 36, 42) to selectively disable or disconnect said oscillator (30, 38, 44) to switch off said oscillating signal to prevent fluctuations in the output of said power supply (10).

2. The circuit of Claim 1, wherein said oscillating signal is a low frequency signal having a frequency substantially lower than the switching frequency of said switched power supply (10).

3. The circuit of any of the preceding claims, wherein said oscillator (30, 38) is a square wave oscillator.

4. The circuit of any of the preceding claims, wherein said oscillator (30, 38) produces an oscillating signal in the form of 50% duty cycle square wave.

5. The circuit of any of the preceding claims, wherein said oscillator (30) injects into said feedback path (22, 24, 26) an oscillating signal with a non-symmetrical waveform.

6. The circuit of claim 5, wherein said oscillator (30) is coupled to said feedback path (22, 24, 26) via a resistor (R3) and a diode (D1).

7. The circuit of any of claims 1 to 4, wherein said oscillator (30) injects into said feedback path (22, 24, 26) an oscillating signal with a symmetrical waveform.

8. The circuit of claim 7, wherein said oscillator (30) is coupled to said feedback path (22, 24, 26) via the parallel connection of:
- the series connection of a resistor (R3) and a diode (D1); and
- a further resistor (R4).

9. The circuit of any of the preceding claims, wherein said sensor is a voltage divider (R1, R2).

10. The circuit of any of the preceding claims, wherein said oscillator is included in a microcontroller (38) associated with said power supply (10).

11. A method of reducing electromagnetic interference from a switched power supply (10) including sensing (R1, R2) a load (L) fed by the power supply (10) and controlling via a feedback path (22, 24, 26) the switching frequency of the switched power supply (10) as a function of said load (L) as sensed, the method including injecting into said feedback path (22, 24, 26) an oscillating signal, said oscillating signal producing a spread in the spectrum of the electromagnetic noise produced by the switched power supply (10), **characterized in that** the method includes selectively switching off said oscillating signal to prevent fluctuations in the output of said power supply (10).

## Patentansprüche

1. Eine Schaltungsanordnung zur Reduzierung elektromagnetischer Interferenz von einer geschalteten Energieversorgung (10) mit einem Sensor (R1, R2), um eine Last (L) zu erfassen, die durch die Energieversorgung (10) zugeführt wurde, und mit einem Rückführpfad (22, 24, 26), um die Schaltfrequenz der geschalteten Energieversorgung (10) als Funktion der durch den Sensor (R1, R2) gemessenen Last (L) zu steuern, wobei die Anordnung einen Oszillator (30, 38, 44) aufweist, um ein oszillierendes Signal in den Rückführpfad (22, 24, 26) einzuführen, wobei das oszillierende Signal eine Ausbreitung in dem Spektrum der elektromagnetischen Störung verursacht, die durch die geschaltete Energieversorgung (10) erzeugt wurde, **dadurch gekennzeichnet, dass** die Schaltung einen Schalter (34, 36, 42) zum wahlweisen Abschalten oder Abtrennen des Oszillators (30, 38, 44) aufweist, um das oszillierende Signal abzuschalten, um Fluktuationen in der Ausgabe der Energieversorgung (10) zu verhindern.

2. Schaltung nach Anspruch 1, wobei das oszillierende Signal ein Niedrigfrequenzsignal mit einer Frequenz ist, die wesentlich niedriger als die Schaltfrequenz der geschalteten Energieversorgung (10) ist.

3. Schaltung nach irgendeinem der vorigen Ansprüche, wobei der Oszillator (30, 38) ein Rechteckswellenoszillator ist.

4. Schalter nach irgendeinem der vorigen Ansprüche, wobei der Oszillator (30, 38) ein oszillierendes Signal in der Form einer 50%-Arbeitszyklusrechteckswelle erzeugt.

5. Schalter nach irgendeinem der vorigen Ansprüche, wobei der Oszillator (30) ein oszillierendes Signal mit einer asymmetrischen Wellenform in den Rückführpfad (22, 24, 26) einführt.

6. Schaltung nach Anspruch 5, wobei der Oszillator (30) an den Rückführpfad (22, 24, 26) über einen Widerstand (R3) und eine Diode (D1) gekoppelt ist.

7. Schaltung nach irgendeinem der Ansprüche 1 bis 4, wobei der Oszillator (30) ein oszillierendes Signal mit einer symmetrischen Wellenform in den Rückführpfad (22, 24, 26) einführt.

8. Schaltung nach Anspruch 7, wobei der Oszillator (30) an den Rückführpfad (22, 24, 26) gekoppelt ist über die parallele Verbindung von:
- der Reihenverbindung eines Widerstandes (R3) und einer Diode (D1); und
- eines weiteren Widerstandes (R4).

9. Schaltung nach irgendeinem der vorigen Ansprüche, wobei der Sensor ein Spannungsteiler (R1, R2) ist.

10. Schaltung nach irgendeinem der vorigen Ansprüche, wobei der Oszillator in einem Mikrokontroller (38) enthalten ist, der der Energieversorgung (10) zugeordnet ist.

11. Verfahren zur Reduzierung elektromagnetischer Interferenz von einer geschalteten Energieversorgung (10), umfassend das Erfassen (R1, R2) einer Last (L), die durch die Energieversorgung (10) zugeführt wurde, und ein Steuern der Schaltfrequenz der geschalteten Energieversorgung (10) als Funktion der erfassten Last (L) über einen Rückführpfad (22, 24, 26), wobei das Verfahren das Einführen eines oszillierenden Signals in den Rückführpfad (22, 24, 26) umfasst, wobei das oszillierende Signal eine Ausbreitung in dem Spektrum der elektromagnetischen Störung verursacht, die durch die geschaltete Energieversorgung (10) erzeugt wurde, **dadurch gekennzeichnet, dass** das Verfahren das wahlweise Ausschalten des oszillierenden Signals umfasst, um Fluktuationen in der Ausgabe der Energieversorgung (10) zu verhindern.

## Revendications

1. Une configuration de circuit pour réduire les interférences électromagnétiques en provenance d'une alimentation de puissance à découpage (10) comprenant un détecteur (R1, R2) pour détecter une charge (L) alimentée par l'alimentation de puissance (10) et un trajet de rétroaction (22, 24, 26) pour contrôler la fréquence de découpage de l'alimentation de puissance à découpage (10) en fonction de ladite charge (L) telle que détectée par ledit détecteur (R1, R2), la configuration comprenant un oscillateur (30, 38, 44) pour injecter dans ledit trajet de rétroaction (22, 24, 26) un signal oscillant, ledit signal oscillant produisant une dispersion du spectre du bruit électromagnétique produit par l'alimentation de puissance à découpage (10), **caractérisée en ce que** le circuit comprend un commutateur (34, 36, 42) pour sélectivement désactiver ou déconnecter ledit oscillateur (30, 38, 44) pour interrompre ledit signal oscillant pour empêcher des fluctuations en sortie de ladite alimentation de puissance (10).

2. Le circuit de la revendication 1, dans lequel ledit signal oscillant est un signal à basse fréquence présentant une fréquence substantiellement inférieure à la fréquence de découpage de ladite alimentation de puissance à découpage (10) .

3. Le circuit de l'une des revendications précédentes, dans lequel ledit oscillateur (30, 38) est un oscillateur à onde carrée.

4. Le circuit de l'une des revendications précédentes, dans lequel ledit oscillateur (30, 38) produit un signal oscillant sous forme d'une onde carrée avec un rapport cyclique de 50 %.

5. Le circuit de l'une des revendications précédentes, dans lequel ledit oscillateur (30) injecte dans ledit trajet de rétroaction (22, 24, 26) un signal oscillant avec une forme d'onde non symétrique.

6. Le circuit de l'une des revendications 5, dans lequel ledit oscillateur (30) est couplé audit trajet de rétroaction (22, 24, 26) via une résistance (R3) et une diode (D1) .

7. Le circuit de l'une des revendications 1 à 4, dans lequel ledit oscillateur (30) injecte dans ledit trajet de rétroaction (22, 24, 26) un signal oscillant avec une forme d'onde symétrique.

8. Le circuit de la revendication 7, dans lequel ledit oscillateur (30) est couplé audit trajet de rétroaction (22, 24, 26) via la liaison en parallèle de :
- la liaison en série d'une résistance (R3) et d'une diode (D1) ; et
- une autre résistance (R4).

9. Le circuit de l'une des revendications précédentes, dans lequel ledit détecteur est un diviseur de tension (R1, R2).

10. Le circuit de l'une des revendications précédentes, dans lequel ledit oscillateur est inclus dans un micro-contrôleur (38) associé à ladite alimentation de puissance (10).

11. Un procédé de réduction des interférences électromagnétiques en provenance d'une alimentation de puissance à découpage (10) comprenant la détection (R1, R2) d'une charge (L) alimentée par l'alimentation de puissance (10) et le contrôle via un trajet de rétroaction (22, 24, 26) de la fréquence de découpage de l'alimentation de puissance à découpage (10) en fonction de ladite charge (L) telle que détectée, le procédé comprenant l'injection dans ledit trajet de rétroaction (22, 24, 26) d'un signal oscillant, ledit signal oscillant produisant une dispersion du spectre du bruit électromagnétique produit par l'alimentation de puissance à découpage (10), **caractérisé en ce que** le procédé comprend l'interruption sélective dudit signal oscillant pour empêcher les fluctuations en sortie de ladite alimentation de puissance (10).
